(19) Europäisches Patentamt
European Patent Office
Office européen des brevets

(11) **EP 2 669 114 B1**

(12) **EUROPEAN PATENT SPECIFICATION**

(45) Date of publication and mention
of the grant of the patent:
**23.12.2015 Bulletin 2015/52**

(51) Int Cl.:
***B60Q 1/12*** *(2006.01)*      ***B60Q 1/18*** *(2006.01)*
***B62J 6/02*** *(2006.01)*

(21) Application number: **13164880.0**

(22) Date of filing: **23.04.2013**

(54) **Vehicle that leans into turns with sub headlight unit or sub headlight system, and method for controlling a sub headlight unit or a sub headlight system for use in vehicle that leans into turns**

*Fahrzeug, das sich in Kurven lehnt, mit Unterscheinwerfereinheit oder Unterscheinwerfersystem, und Verfahren zum Steuern vom Unterscheinwerfereinheit oder Unterscheinwerfersystem zur Verwendung in einem Fahrzeug, das sich in Kurven lehnt*

*Véhicule qui penche dans les virages avec unité ou système de phare secondaire, et méthode de contrôle d'unité ou de système de phare secondaire pour utilisation dans un véhicule qui penche dans les virages*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2012 JP 2012125265**

(43) Date of publication of application:
**04.12.2013 Bulletin 2013/49**

(73) Proprietor: **Yamaha Hatsudoki Kabushiki Kaisha Iwata-shi, Shizuoka 438-8501 (JP)**

(72) Inventors:
• **Kino, Yasuhiko**
  **Iwata-shi, Shizuoka 438-8501 (JP)**
• **Inoue, Takehiro**
  **Iwata-shi, Shizuoka 438-8501 (JP)**

(74) Representative: **Grünecker Patent- und Rechtsanwälte
PartG mbB
Leopoldstraße 4
80802 München (DE)**

(56) References cited:
EP-A1- 1 800 947          WO-A1-2010/061651
BE-A- 513 419             DE-A1- 19 923 187
DE-A1-102007 013 309      GB-A- 1 352 102
JP-A- 2009 120 057        US-A- 1 746 508
US-A- 1 843 825           US-A1- 2002 015 308
US-A1- 2010 213 872

**Description**

The present invention relates to a sub headlight unit and a sub headlight system for use in a vehicle that leans into turns, and to a vehicle that leans into turns.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the left and right in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed in which, in addition to a main headlight that illuminates an area ahead of the vehicle, sub headlights configured to be turned on depending on the magnitude of a lean angle (angle of inclination of a vehicle body to the inner side of a curve relative to an upright state thereof) are provided as the headlight (WO 2010/061651). In a vehicle disclosed in WO 2010/061651, the main headlight is arranged at the center of the vehicle, and each of the sub headlights is arranged at each of the left and right sides of the main headlight.

Such a vehicle is known from WO 2010/061651.

A situation where the vehicle corners or turns at an intersection is not always the same, and there are a wide variety of running scenes. The present inventors have studied cases where the vehicle disclosed in WO 2010/061651 runs in a wide variety of scenes, and found out the following problems.

In the vehicle disclosed in WO 2010/061651, when the vehicle corners or turns at an intersection, the position and brightness of the illumination range of the headlight within a rider's field of view largely changes, which sometimes causes the rider to feel uncomfortable.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In the vehicle disclosed in WO 2010/061651, the sub headlights are turned on in accordance with an increase in the lean angle. Accordingly, at a time point when a light source is turned on, an illumination range of this light source is additionally provided, which can suppress a reduction in the illumination range which may be caused by inclination of the vehicle.

Here, after the sub headlight is turned on, in accordance with an increase in the lean angle of the vehicle, an illumination range of the sub headlight produced on a road surface continuously approaches to the vehicle, and accordingly reflected light from the road surface increases. At this time, the degree of change in the position and brightness of the illumination range of the headlight light source varies depending on the amount of change in the lean angle per unit time. In other words, the degree of change in the position and brightness of the illumination range varies depending on a running scene.

Therefore, in a case where the degree of change in the position and brightness of the illumination range largely differs for each turn in a curve or in a case where the speed of change in the position and brightness of the illumination range is excessively high, the rider may feel uncomfortable.

Further EP1800947A1 discloses an adaptive front lighting system for a vehicle with first and second light sources which are situated toward the left and right sides of the vehicle.

The present invention has been made in view of the problems described above, and an object of the present invention is to suppress occurrence of a situation where a rider feels uncomfortable about a change in an illumination range in the course of an increase or decrease in the lean angle of a vehicle body.

To solve the problems described above, the present invention adopts the following configurations.

(1) A vehicle that leans into turns with an attitude leaning to the inner side of a curve, the vehicle comprising main headlight light sources being arranged at both left and right sides with respect to a width direction of the vehicle and being configured to illuminate an area ahead in front of the vehicle, and,

a sub headlight unit comprising a right sub headlight light source that illuminates an area ahead and to the right of the vehicle and a left sub headlight light source that illuminates an area ahead and to the left of the vehicle, the right sub headlight light source and the left sub headlight light source are configured such that the sub headlight light source that illuminates the same side as the side to which the vehicle is leaning is turned on in accordance with an increase in the lean angle of the vehicle,

wherein the right sub headlight light source and the left sub headlight light source being arranged between main headlight light sources provided in the vehicle to be closer to the center of the vehicle with respect to the width direction of the vehicle than the main headlight light sources.

In the vehicle disclosed in WO 2010/061651, the sub headlights are arranged at the left and right sides of the main headlight, and therefore the width of vertical movement of the sub headlight moved when the vehicle leans is large.

In this respect, in a configuration of (1), the sub headlight light sources are arranged between the main headlight light sources that are provided at both left and right sides. This allows the sub headlight light sources to be arranged in a state of being gathered at the center with respect to the width direction of the vehicle.

As a result, the width of vertical movement of each sub headlight light source moved when the vehicle leans can be made small. Therefore, the sub headlight light source can be maintained at a relatively high positions.

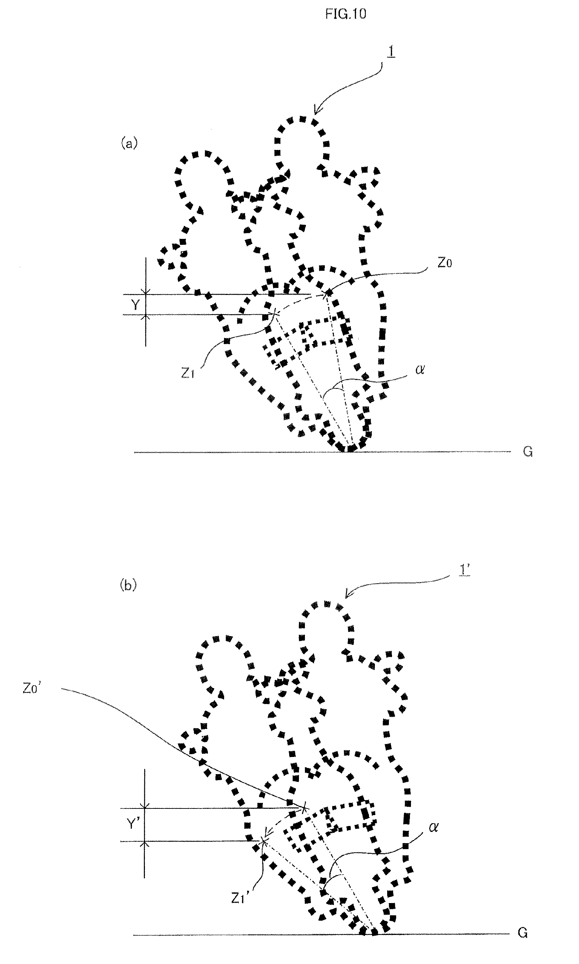

A specific description will be given to this point with reference to FIGS. 10(a) and 10(b). FIG. 10(a) illustrates a state where a vehicle 1 according to the present invention is inclined to the left so that one sub headlight $Z_0$ is turned on. FIG. 10(b) illustrates a state where a vehicle 1' having sub headlights provided at both left and right sides of a main headlight is inclined to the left so that one sub headlight $Z_0'$ is turned on. In FIGS. 10(a) and 10(b), only one sub headlight $Z_0$, $Z_0'$ is shown.

In FIG. 10(a), the sub headlight light source $Z_0$ is arranged at the center of the vehicle 1 with respect to the width direction of the vehicle. In this condition, the vehicle 1 leans to the left through an angle $\alpha(°)$, so that the sub headlight light source $Z_0$ moves down along a circular arc having its center located on the point of contact between the vehicle 1 and a ground G in a front elevational view. Then, the sub headlight light source $Z_0$ reaches the position of $Z_1$. A difference in the heights of $Z_0$ and $Z_1$ is Y.

In FIG. 10(b), the sub headlight light source $Z_0'$ is arranged at the left side of the vehicle 1' with respect to the width direction of the vehicle. In this condition, the vehicle 1' leans to the left through an angle $\alpha(°)$, so that the sub headlight light source $Z_0'$ moves down along a circular arc having its center located on the point of contact between the vehicle 1 and the ground G in a front elevational view. Then, the sub headlight light source $Z_0'$ reaches the position of $Z_1'$. A difference in the heights of $Z_0'$ and $Z_1'$ is Y'.

As shown in FIGS. 10(a) and 10(b), Y is smaller than Y'.

Thus, the configuration of (1) can reduce the width of vertical movement of the sub headlight light source moved in accordance with a change in the lean angle, and therefore can maintain the sub headlight light source at a relatively high position. This can consequently relieve the degree of change in the position and brightness of a illumination range of the sub headlight light source within a rider's field of view.

Moreover, the main headlights keep illuminating an area ahead in front of the vehicle irrespective of whether the sub headlight light sources are turned on or turned off. Accordingly, it is possible to keep the ease of seeing a position the rider desires to see, even when the vehicle is returning from a lean attitude to an upright attitude.

As a result, in the configuration of (1), occurrence of a situation where the rider feels uncomfortable about a change in the illumination range can be suppressed in the course of an increase or decrease in the lean angle of the vehicle body.

The configuration can suppress occurrence of a situation where the rider feels uncomfortable about a change in the illumination range in the course of an increase or decrease in the lean angle of the vehicle body.

> (2) The vehicle according to (1), wherein
> the sub headlight unit includes a heat dissipation structure that is shared between the right sub headlight light source and the left sub headlight light source.

In a configuration of (2), one of the right and left sub headlight light sources that illuminates the same side as the side to which the vehicle is leaning is turned on in accordance with the lean angle of the vehicle. Accordingly, when one of the left and right sub headlight light sources is turned on, the other sub headlight light source is turned off. This allows the sub headlight light source that is currently turned on to use a part of the heat dissipation structure corresponding to the sub headlight light source that is currently turned off. This can reduce the size of the heat dissipation structure as compared with a case where one heat dissipation structure is provided to one light source.

Additionally, since the right sub headlight light source and the left sub headlight light source are arranged between the main headlight light sources provided at both left and right sides, a distance between the right sub headlight light source and the left sub headlight light source is short. This enables downsizing of the heat dissipation structure.

As described above, the configuration of (2) can downsize the heat dissipation structure, and therefore can downsize the sub headlight unit.

> (3) The vehicle according to (1) or (2), wherein
> when seen from the front side of the vehicle in an upright state, the right sub headlight light source and the left sub headlight light source are arranged in a vertical alignment between the main headlight light sources provided at both left and right sides.

A configuration of (3) enables the left and right sub headlight light sources to be arranged in a vertical alignment in a central portion of the vehicle with respect to the width direction of the vehicle in a front elevational view. This can enhance the conspicuity of the sub headlight light sources when seen from the surroundings.

> (4) The vehicle according to (3), wherein
> each of the left and right sub headlight light sources comprises a plurality of sub headlight light sources, and the left sub headlight light sources and the right sub headlight light sources are alternately arranged in a vertical direction.

In a configuration of (4), when one of the left and right sub headlight light sources is turned on, the other sub headlight light source is turned off. Accordingly, the sub headlight light source that is turned on and the sub headlight light source that is turned off are alternately arranged. Such an arrangement in which the sub headlight light sources that are turned on are dispersed can suppress a heat accumulation. Therefore, the heat dissipation structure can be downsized. As a result, the sub headlight unit can be downsized.

> (5) The vehicle according to any one of (1) to (4), wherein
> each of the left and right sub headlight light sources comprises a plurality of sub headlight light sources,
> along with an increase in the lean angle of the vehicle, the plurality of sub headlight light sources that illuminate the same side as the side to which the vehicle is leaning are sequentially turned on from the sub headlight light source located lowermost in an upright state.

A configuration of (5) can reduce a difference in the heights of the respective sub headlight light sources at times when they are turned on. As a result, a difference in the illumination ranges produced on a road surface at times when the sub headlight light sources are turned on can be made small. Accordingly, when seen from the rider, a difference in shadows, which are produced when an obstacle (such as unevenness on the road surface) exists, can be made small. This can more effectively suppress occurrence of a situation where the rider feels uncomfortable about a change in the illumination range in the course of an increase or decrease in the lean angle of the vehicle body.

Moreover, the sub headlight light source configured to be turned on upon a large lean angle can be located at a relatively high position at a time when this sub headlight light source is turned on. Thus, a relatively wide illumination range can be ensured as the illumination range of the sub headlight light source configured to be turned on upon a large lean angle. Additionally, since the sub headlight light source is turned on at a relatively high position, it is relatively easy to set an illumination range on the road surface. It is also easy for the rider to visually recognize an obstacle (such as unevenness on the road surface) and an area behind the obstacle.

(6) The vehicle according to any one of (1) to (4), wherein
each of the left and right sub headlight light sources comprises a plurality of sub headlight light sources,
along with an increase in the lean angle of the vehicle, the plurality of sub headlight light sources that illuminate the same side as the side to which the vehicle is leaning are sequentially turned on from the sub headlight light source located uppermost in an upright state.

The sub headlight light source configured to be turned on upon a small lean angle is more frequently turned on than the sub headlight light source configured to be turned on upon a large lean angle. In a configuration of (6), the sub headlight light source configured to be turned on upon a small lean angle can be located at a relatively high position at a time when this sub headlight light source is turned on. Thus, a relatively wide illumination range can be ensured as the illumination range of the sub headlight light source configured to be turned on upon a small lean angle. Additionally, since the sub headlight light source is turned on at a relatively high position, it is relatively easy to set an illumination range on the road surface. It is also easy for the rider to visually recognize an obstacle (such as unevenness on the road surface) and an area behind the obstacle.

(7) A vehicle with a sub headlight system for use in a vehicle that leans into turns,
the sub headlight system including:

the sub headlight unit according to any one of (1) to (6);
a detection part that detects a variable available for obtaining the lean angle of the vehicle; and
a control part that turns on the plurality of sub headlight light sources in accordance with the lean angle of the vehicle obtained based on a result of detection by the detection part.

A configuration of (7) achieves an AFS (Adaptive Front-Lighting System) that enables suppression of occurrence of a situation where the rider feels uncomfortable about a change in the illumination range in the course of an increase or decrease in the lean angle of the vehicle body.

(8) A method to control a sub headlight unit for use in a vehicle that leans into turns, with an attitude leaning to the inner side of a curve,
the sub headlight unit comprising a right sub headlight light source that illuminates an area ahead and to the right of the vehicle and a left sub headlight light source that illuminates an area ahead and to the left of the vehicle, wherein
the right sub headlight light source and the left sub headlight light source are configured such that the sub headlight light source that illuminates the same side as the side to which the vehicle is leaning is turned on in accordance with an increase in the lean angle of the vehicle,
the right sub headlight light source and the left sub headlight light source being arranged between main headlight light sources provided in the vehicle to be closer to the center of the vehicle with respect to the width direction of the vehicle than the main headlight light sources and being configured to be turned on in accordance with a lean angle of the vehicle, the main headlight light sources being arranged at both left and right sides with respect to a width direction of the vehicle and being configured to illuminate an area ahead in front of the vehicle.
(9) A method to control a sub headlight unit according to (8), wherein
each of the left and right sub headlight light sources comprises a plurality of sub headlight light sources,
and along with an increase in the lean angle of the vehicle, the plurality of sub headlight light sources that illuminate the same side as the side to which the vehicle is leaning are sequentially turned on from the sub headlight light source located lowermost in an upright state.
(10) A method to control a sub headlight unit according to (8), wherein
each of the left and right sub headlight light sources comprises a plurality of sub headlight light sources,
and along with an increase in the lean angle of the vehicle, the plurality of sub headlight light sources that illuminate the same side as the side to which the vehicle is leaning are sequentially turned on from the sub headlight light source located uppermost in an upright state.
(11) A method to control a sub headlight system for use in a vehicle that leans into turns, the sub headlight system comprising:

the sub headlight unit according to any one of (1) to (6), wherein
a detection part detects a variable available for obtaining the lean angle of the vehicle; and
a control part turns on the plurality of sub headlight light sources in accordance with the lean angle of the vehicle obtained based on a result of detection by the detection part.

These and other objects, features, aspects and advantages of the present invention will become apparent to those skilled in the art from the following detailed description, which, taken in conjunction with the accompanying drawings, discloses some embodiments of the present invention.

[EFFECTS OF THE INVENTION]

The present invention enables suppression of occurrence of a situation where a rider feels uncomfortable about a change in an illumination range in the course of an increase or decrease in a lean angle of a vehicle body.

[BRIEF DESCRIPTION OF THE DRAWINGS]

[FIG. 1] A front elevational view schematically showing, on an enlarged scale, a part of a motorcycle according to an embodiment of the present invention.
[FIG. 2] A left side view schematically showing, on an enlarged scale, a part of the motorcycle shown in FIG. 1.
[FIG. 3] A block diagram showing a basic configuration concerning a sub headlight unit of the motorcycle shown in FIG. 1.
[FIG. 4] (a) is a front elevational view schematically showing optical axes and cut-off lines of sub headlight light sources of the motorcycle in an upright state; and (b) is a front elevational view schematically showing the optical axes and the cut-off lines of the sub headlight light sources of the motorcycle with a lean attitude.
[FIG. 5] (a) to (c) are diagrams for explaining an example of a process in which a plurality of sub headlight light sources are sequentially turned on in accordance with an increase in a lean angle of the motorcycle leaning to the left; and (d) to (f) are diagrams for explaining an example of a process in which a plurality of sub headlight light sources are sequentially turned on in accordance with an increase in the lean angle of the motorcycle leaning to the right.
[FIG. 6] A perspective view schematically showing the sub headlight unit included in the motorcycle shown in FIG. 1.
[FIG. 7] (a) to (c) are diagrams for explaining another example of the process in which the plurality of sub headlight light sources are sequentially turned on in accordance with an increase in the lean angle of the motorcycle leaning to the left; and (d) to (f) are diagrams for explaining another example of the process in which the plurality of sub headlight light sources are sequentially turned on in accordance with an increase in the lean angle of the motorcycle leaning to the right.
[FIG. 8] (a) to (c) are diagrams for explaining still another example of the process in which the plurality of sub headlight light sources are sequentially turned on in accordance with an increase in the lean angle of the motorcycle leaning to the left; and (d) to (f) are diagrams for explaining still another example of the process in which the plurality of sub headlight light sources are sequentially turned on in accordance with an increase in the lean angle of the motorcycle leaning to the right.
[FIG. 9] A front elevational view schematically showing, on an enlarged scale, a part of a motorcycle according to another embodiment of the present invention.
[FIG. 10] (a) illustrates a state where a vehicle according to the present invention is inclined to the left so that one sub headlight light source is turned on; and (b) illustrates a state where a vehicle having sub headlights arranged at both left and right sides of a main headlight is inclined to the left so that one sub headlight light source is turned on.

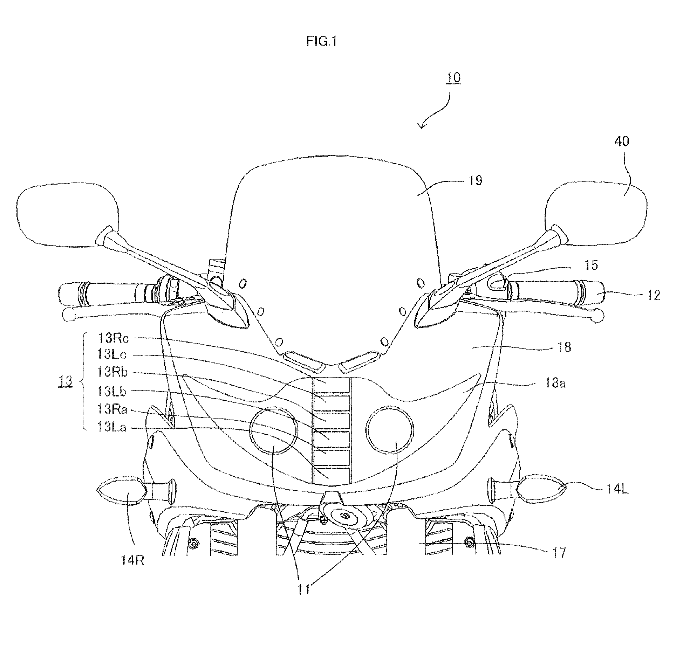

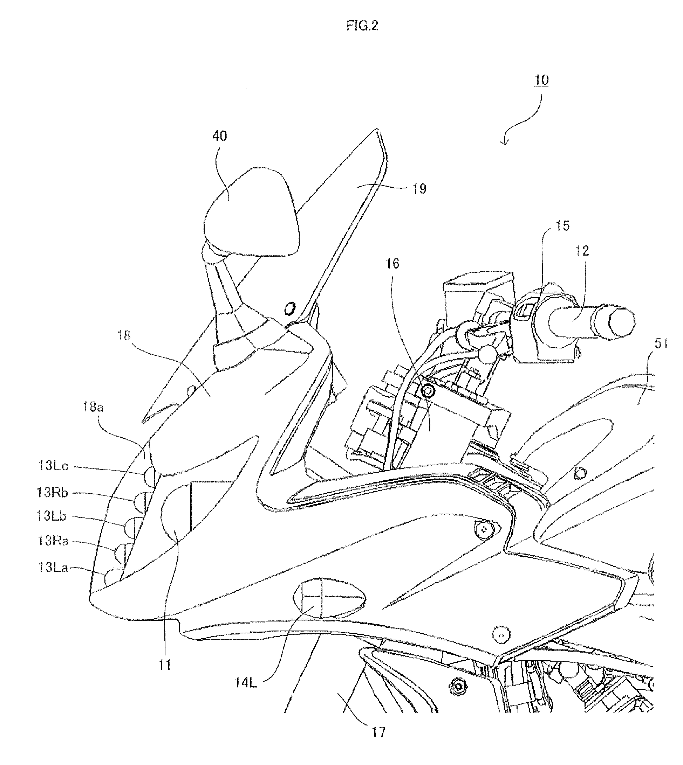

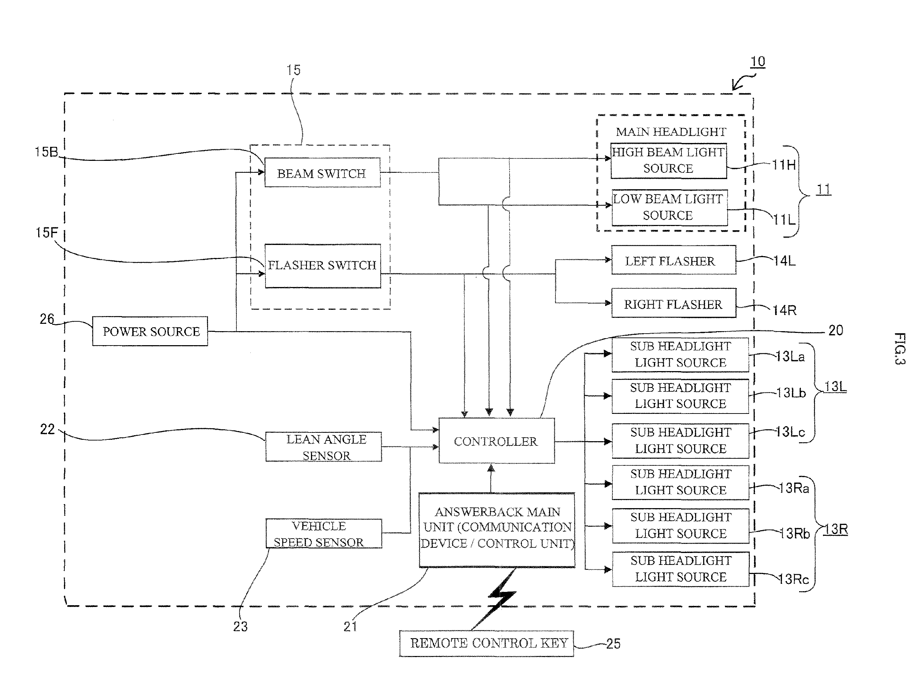

FIG. 1 is a front elevational view schematically showing, on an enlarged scale, a part of a motorcycle according to an embodiment of the present invention. FIG. 2 is a left side view schematically showing, on an enlarged scale, a part of the motorcycle shown in FIG. 1.
A motorcycle 10 is an example of a vehicle that leans into turns according to the present invention. In the present invention, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.
The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe 16. A frontfork 17 is provided at a lower end of the steering shaft. A front wheel (not shown) is rotatably supported at the lower end of the frontfork 17. The headpipe 16 is a member constituting a vehicle body frame. In the present invention, no particular limitation is put on the vehicle body frame, and a conventionally known configuration is adoptable.

A front cover 18 covers a front part of the headpipe 16 having the steering shaft passing therethrough. The front cover 18 has, on its front surface, an outer cover 18a having transparency. On the front surface of the front cover 18, main headlights 11 are provided at both left and right sides with respect to the width direction of the vehicle. The main headlights 11 are arranged inside the outer cover 18a, and visible through the outer cover 18a from the front side of the motorcycle 10. The main headlights 11 are headlights of two lamp type. In this embodiment, each of the main headlights 11 includes, as a main headlight light source, a high beam light source 11H (running headlight) and a low beam light source 11L (passing headlight), though not shown in FIG. 1. The high beam light source 11H illuminates an area ahead in front of the motorcycle 10 at a height equal to or above a horizontal plane of the main headlight 11. The low beam light source 11L illuminates an area ahead in front of the motorcycle 10 at a height below the horizontal plane of the main headlight 11.

The main headlight 11 of the present invention is not limited to the above-described example. In another possible example, one of the main headlights 11 includes the high beam light source 11H while the other includes the low beam light source 11L. In such a case, when the high beam light source 11H is turned on, the low beam light source 11L is turned off. However, it may be acceptable that the low beam light source 11L is turned on when the high beam light source 11H is turned on.

Flashers 14L and 14R, serving as direction indicators, are provided at both sides of the motorcycle 10 with respect to the width direction of the vehicle. A transparent screen 19 is provided above the front cover 18 in a central portion thereof with respect to the width direction of the vehicle. The screen 19 is inclined upward and rearward. The screen 19 is arranged at the front side of the handlebar 12 (see FIG. 2).

A sub headlight unit 13 of variable light distribution type is provided between the left and right main headlights 11. The sub headlight unit 13 is provided to the front cover 18, arranged inside the outer cover 18a, and visible through the outer cover 18a from the front side of the motorcycle 10. The sub headlight unit 13 includes left sub headlight light sources 13La, 13Lb, 13Lc and right sub headlight light sources 13Ra, 13Rb, 13Rc. The left sub headlight light sources 13La, 13Lb, 13Lc and the right sub headlight light sources 13Ra, 13Rb, 13Rc are arranged in a vertical alignment between the left and right main headlights 11. In this embodiment, the left sub headlight light sources 13La, 13Lb, 13Lc and the right sub headlight light sources 13Ra, 13Rb, 13Rc are arranged in a vertical alignment at the center of the motorcycle 10 with respect to the width direction of the vehicle. In this embodiment, the left sub headlight light source 13L and the right sub headlight light source 13R are alternately arranged. To be specific, they are arranged in the following order from the upper side:

the right sub headlight light source 13Rc:
the left sub headlight light source 13Lc;
the right sub headlight light source 13Rb;
the left sub headlight light source 13Lb;
the right sub headlight light source 13Ra; and
the left sub headlight light source 13La.

As shown in FIG. 2, the lowermost sub headlight light source (13La) is positioned most ahead with respect to the front-back direction of the vehicle. A sub headlight light source arranged lower is positioned more ahead than a sub headlight light source arranged upper. In this embodiment, at least one of the right sub headlight light sources and at least one of the left sub headlight light sources are arranged in positions visible in a side view. This ensures the conspicuity when seen from the surroundings. Here, it may be also acceptable that all of the right sub headlight light sources and the left sub headlight light sources are arranged in positions visible in a side view.

The sub headlight light sources 13La, 13Lb, and 13Lc illuminate an area ahead and left-lateral of the motorcycle 10. Illumination ranges of the sub headlight light sources 13La, 13Lb, and 13Lc are arranged in this order from the center toward the upper left with respect to the width direction of the vehicle. The illumination ranges of the sub headlight light sources 13La, 13Lb, and 13Lc overlap one another.

The sub headlight light sources 13Ra, 13Rb, and 13Rc illuminate an area ahead and right-lateral of the motorcycle 10. Illumination ranges of the sub headlight light sources 13Ra, 13Rb, and 13Rc are arranged in this order from the center toward the upper right with respect to the width direction of the vehicle. The illumination ranges of the sub headlight light sources 13Ra, 13Rb, and 13Rc overlap one another.

Optical axes of the sub headlight light sources 13La to 13Lc, 13Ra to 13Rc are fixed, and not moved in accordance with a lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present invention. In the present invention, it suffices that the left and right sub headlight light sources are arranged between the left and right main headlight light sources, an arrangement manner of them is not limited to the above-described example.

Back mirrors 40 are provided above the front cover 18 and at both left and right sides of the screen 19. As shown in FIG. 2, a fuel tank 51 is provided at the rear side of the handlebar 12.

In this embodiment, the outer cover 18a covers the left and right main headlights 11 and the central sub headlight unit 13. However, the present invention is not limited to this example. It may be possible to separately provide an outer cover for covering the main headlights 11 and an outer cover for covering the sub headlight unit 13. Additionally, the outer cover for covering the main headlight 11 may be divided into an outer cover for covering the left main headlight 11 and an outer cover for covering the right main headlight 11.

FIG. 3 is a block diagram showing a basic configuration concerning the sub headlight unit 13 of the motorcycle 10 shown in FIG. 1.

The operation switch 15 includes the beam switch 15B and the flasher switch 15F. The beam switch 15B is connected to the high beam light source 11H and the low beam light source 11L included in the main headlight 11. When the rider operates the beam switch 15B, turn-on/turn-off of the high beam light source 11H and the low beam light source 11L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, in the present invention, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a plurality of reference values (°) to be compared with the lean angle. In this embodiment, the memory stores three reference values. The reference values are different from one another, and associated with the sub headlight light sources 13La, 13Lb, and 13Lc, respectively. The reference value increases in the order of the reference values associated with the sub headlight light sources 13La, 13Lb, and 13Lc.

When the lean angle of the motorcycle 10 leaning to the left is equal to or larger than the reference value, the controller 20 turns on, among the sub headlight light sources 13La to 13Lc arranged at the same side as the side to which the motorcycle 10 is leaning, the sub headlight light source having this reference value associated therewith. On the other hand, when the lean angle is less than the reference value, the controller 20 turns off the sub headlight light source. The reference value increases in the order of the reference values associated with the sub headlight light sources 13La, 13Lb, and 13Lc. Therefore, in the course of an increase in the lean angle, the sub headlight light sources 13La, 13Lb, and 13Lc are turned on in this order. In the course of a decrease in the lean angle, the sub headlight light sources 13Lc, 13Lb, and 13La are turned off in this order.

The sub headlight light sources 13Ra, 13Rb, and 13Rc also have reference values associated therewith, similarly to the sub headlight light sources 13La, 13Lb, and 13Lc.

The sub headlight light sources 13La to 13Lc, 13Ra to 13Rc are connected to the controller 20. A power source 26 is connected to the high beam light source 11 H and the low beam light source 11L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

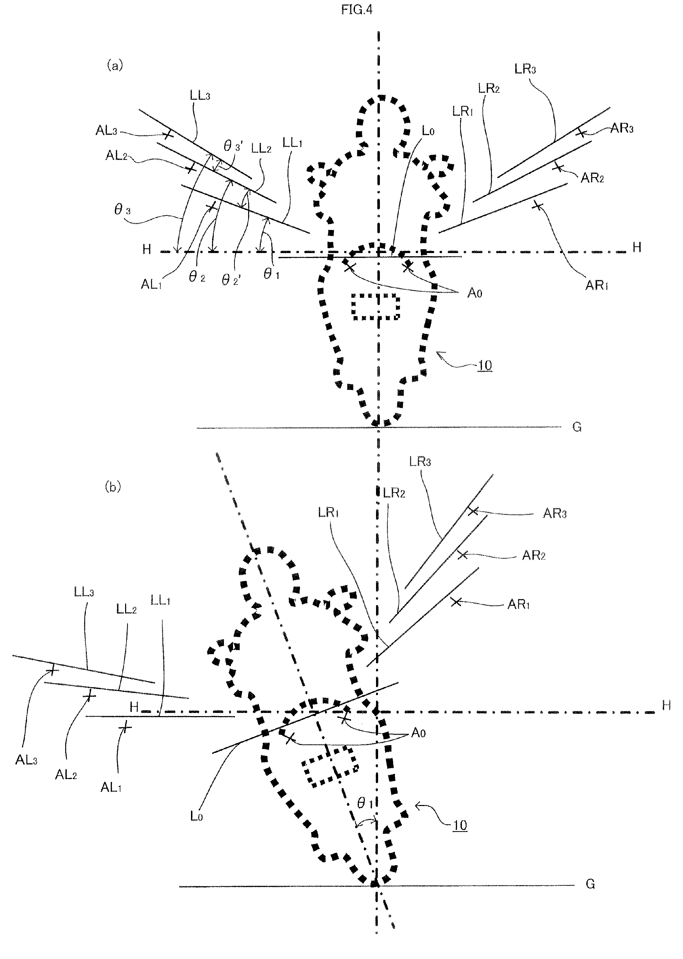

FIG. 4(a) is a front elevational view schematically showing optical axes and cut-off lines of the sub headlight light sources 13La to 13Lc, 13Ra to 13Rc of the motorcycle 10 in an upright state. FIG. 4(b) is a front elevational view schematically showing the optical axes and the cut-off lines of the sub headlight light sources 13La to 13Lc, 13Ra to 13Rc of the motorcycle 10 with a lean attitude.

As shown in FIG. 4(a), the motorcycle 10 stands upright on a flat ground G. An optical axis $A_0$ of the low beam light source 11L is located below a horizontal line H of the low beam light source 11L. A cut-off line $L_0$ of the low beam light source 11L is located above the optical axis $A_0$, and located below the horizontal line H of the low beam light source 11L. The cut-off line $L_0$ extends right and left along the width direction of the vehicle. An illumination range of the low beam light source 11L covers both right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11L.

Inclination angles $\theta_1$ to $\theta_3$ of cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_1$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy $\theta_1 > \theta_2' > \theta_3'$. In other words, a larger inclination angle ($\theta_1$ to $\theta_3$) has a smaller interval ($\theta_1$, $\theta_2'$, $\theta_3'$). Here, in the present invention, the intervals are not limited to the above-mentioned one. For example, the intervals may be regular intervals.

In this embodiment, the reference values (°) for turning on the sub headlight light sources 13La, 13Lb, 13Lc are set to be $\theta_1$, $\theta_2$, and $\theta_3$, respectively. Accordingly, when the motorcycle 10 is running in the upright state ($\theta$=0), the sub headlight light sources 13La to 13Lc, 13Ra to 13Rc are not turned on. As shown in FIG. 4(b), when the motorcycle 10 is inclined to one side (to the left in FIG. 4) with respect to the width direction of the vehicle so that the lean angle reaches $\theta_1$, it means that the lean angle of the motorcycle 10 reaches the reference value. Therefore, the sub headlight light source 13La arranged at the same side (left side) as the side to which the motorcycle 10 is leaning is turned on. At this time, the cut-off line $LL_1$ is horizontal. Then, when the lean angle reaches $\theta_2$ along with an increase in the lean angle, the sub headlight light source 13Lb is turned on, with the cut-off line $LL_2$ being horizontal at this time. Then, when the lean angle reaches $\theta_3$ along with an increase in the lean angle, the sub headlight light source 13Lc is turned on, with the cut-off line $LL_3$ being horizontal at this time.

The relationship between the inclination angle ($\theta_1$ to $\theta_3$) of the cut-off line ($LL_1$ to $LL_3$) of each sub headlight light source (13La to 13Lc) and the reference value set for this sub headlight light source (13La to 13Lc) is not limited to this example. These values (angles) may be different from each other. Here, a state where these values are the same encompasses a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, though not shown in FIG. 4. Therefore, the illumination ranges of the sub headlight light sources 13La to 13Lc are located below the cut-off lines $LL_1$ to $LL_3$ of the sub headlight light sources 13La to 13Lc. Accordingly, each of the illumination ranges of the sub headlight light sources 13La to 13Lc contains a space above the horizontal line H, and their locations are higher in ascending order of the illumination range of the sub headlight light source 13La, the illumination range of the sub headlight light source 13Lb, and the illumination range of the sub headlight light source 13Lc. The illumination ranges of the sub headlight light sources 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Here, in the present invention, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m)}) / (\text{Distance between D and E (m)})]^2 \qquad \ldots (I)$$

Next, a manner in which the sub headlight light sources 13La to 13Lc, 13Ra to 13Rc are turned on will be described.

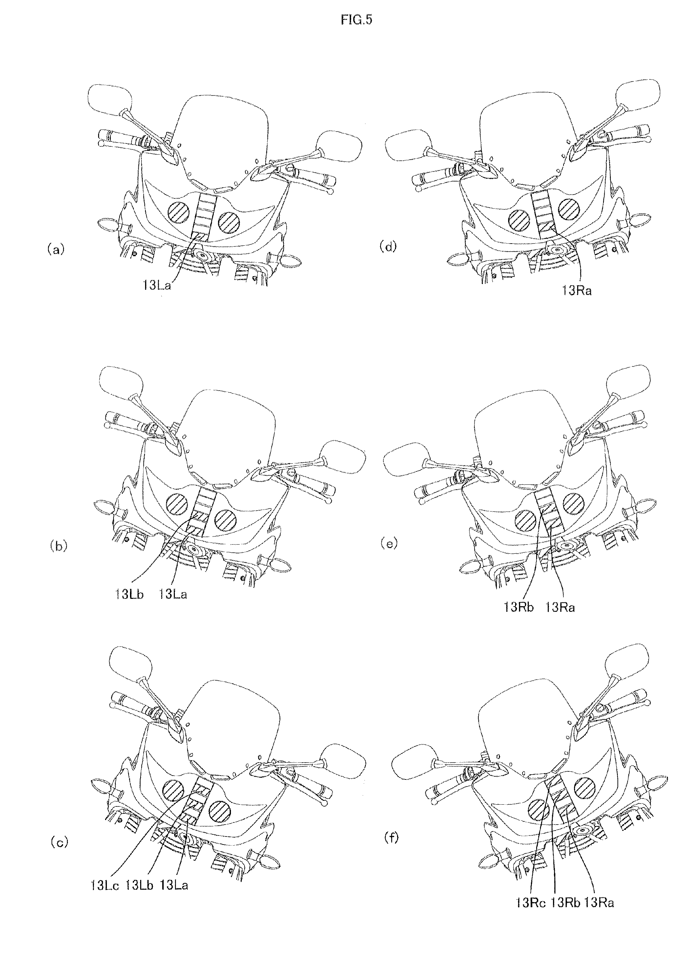

FIGS. 5(a) to 5(c) are diagrams for explaining an example of a process in which the plurality of sub headlight light sources 13La to 13Lc are sequentially turned on in accordance with an increase in the lean angle of the motorcycle 10 leaning to the left. FIGS. 5(d) to 5(f) are diagrams for explaining an example of a process in which the plurality of sub headlight light sources 13Ra to 13Rc are sequentially turned on in accordance with an increase in the lean angle of the motorcycle 10 leaning to the right.

In the course of an increase in the lean angle of the motorcycle 10 leaning to the left, firstly, when the lean angle takes a value equal to or greater than the smallest reference value, the left sub headlight light source 13La arranged lowermost is turned on (FIG. 5(a)). Then, when the lean angle takes a value equal to or greater than the second smallest reference value, the left sub headlight light source 13Lb arranged second lowermost is turned on (FIG. 5(b)). Then, when the lean angle takes a value equal to or greater than the greatest reference value, the left sub headlight light source 13Lc arranged uppermost is turned on (FIG. 5(c)).

The same is true for a manner in which the right sub headlight light sources 13Ra to 13Rc are turned on in the course of an increase in the lean angle of the motorcycle 10 leaning to the right (FIGS. 5(d) to 5(f)).

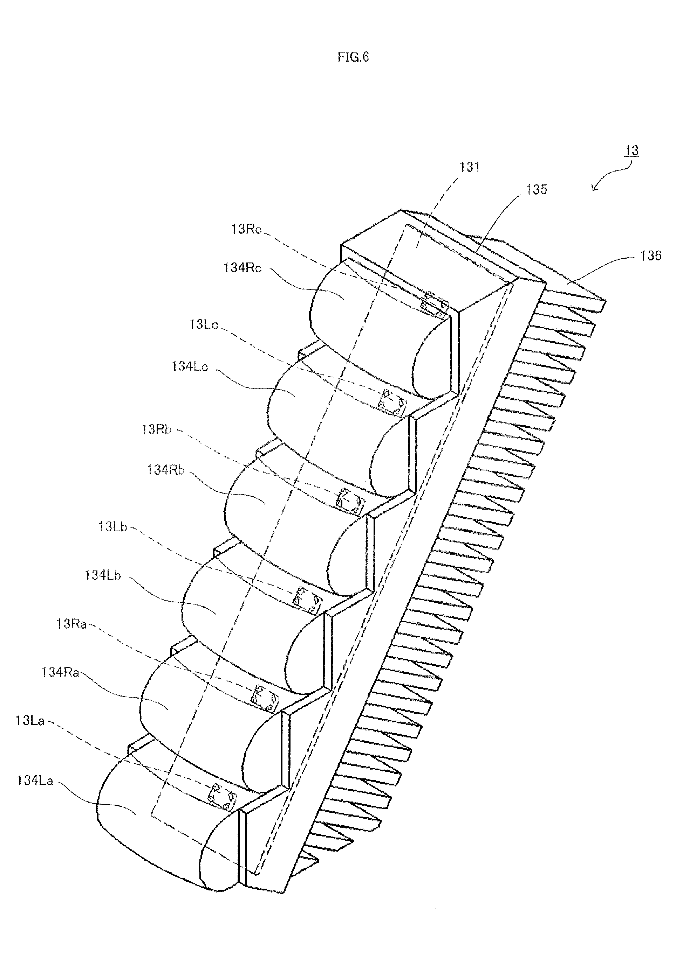

FIG. 6 is a perspective view schematically showing the sub headlight unit 13 included in the motorcycle 10 shown in FIG. 1.

The sub headlight unit 13 includes the plurality of left sub headlight light sources 13La to 13Lc and right sub headlight light sources 13Ra to 13Rc. The plurality of sub headlight light sources 13La to 13Lc, 13Ra to 13Rc are mounted on a single flat-plate-like substrate 131. The substrate 131 is accommodated in a single casing 135. The casing 135 has a heat dissipation fin 136 provided integrally therewith. The casing 135 and the heat dissipation fin 136 serve as a heat dissipation structure provided to the sub headlight unit 13. The heat dissipation structure is shared among the left sub headlight light sources 13La to 13Lc and the right sub headlight light sources 13Ra to 13Rc.

The left sub headlight light source 13L (13La to 13Lc) and the right sub headlight light source 13R (13Ra to 13Rc) are configured such that, in accordance with the lean angle of the motorcycle 10, the sub headlight light source illuminating the same side as the side to which the motorcycle 10 is leaning is turned on. Accordingly, the left sub headlight light source 13L and the right sub headlight light source 13R are not simultaneously turned on. Therefore, sharing the heat dissipation structure allows the sub headlight light source that is currently turned on to use a part of the heat dissipation structure corresponding to the sub headlight light source that is currently turned off. This can downsize the heat dissipation structure as compared with a case where the heat dissipation structure is provided to each light source. Additionally, since the left sub headlight light source 13L and the right sub headlight light source 13R are arranged in a vertical alignment between the main headlights 11, they are able to be mounted to the single flat-plate-like substrate 131. Thus, sharing of the heat dissipation structure is easily achieved, and the heat dissipation structure can be simplified.

In this embodiment, a description has been given to a case where the heat dissipation structure is shared among the plurality of sub headlight light sources 13La to 13Lc, 13Ra to 13Rc that are mounted to one substrate. However, the present invention is not limited to this example. For example, it may be possible that the heat dissipation structure is shared among a plurality of sub headlight light sources that are mounted to separate substrates each corresponding to each of the sub headlight light sources. The number of sub headlight light sources mounted to one substrate is not limited to the above-described example. For example, two neighboring sub headlight light sources may be mounted to one substrate.

Furthermore, in the present invention, it is not always necessary that a plurality of sub headlight light sources are accommodated in one casing as illustrated in this embodiment. For example, the sub headlight light sources may be accommodated in separate casings. In such a case, for example, a heatsink (such as a heat dissipation fin) is arranged in contact with each of the plurality of casings, thereby allowing the plurality of sub headlight light sources to share a heat dissipation structure.

Lenses 134 (134La to 134Lc, 134Ra to 134Rc) are provided in front of the sub headlight light sources 13La to 13Lc, 13Ra to 13Rc, respectively. Each of the lenses 134 has a convex surface in a front portion thereof. As shown in FIG. 2, the convex surface of the lens 134 protrudes toward the front side of the vehicle.

The sub headlight light sources 13La to 13Lc, 13Ra to 13Rc mounted to the substrate 131 emit light in a direction perpendicular to a surface of the substrate 131. As shown in FIG. 2, the substrate 131 is arranged such that it is inclined upward and rearward. Therefore, light produced from the sub headlight light sources 13La to 13Lc, 13Ra to 13Rc is emitted ahead and upward, and incident on the lenses 134. The lenses 134 adjust a light distribution, and then the light is emitted from the lenses 134. The light having passed through the lenses 134 goes through the outer cover 18a, and then is emitted in a direction ahead and outward of the motorcycle 10.

The plurality of left sub headlight light sources 13La to 13Lc, 13Ra to 13Rc are arranged alternately in the vertical direction. Therefore, as shown in FIG. 5, in the course of an increase in the lean angle, neighboring ones of the sub headlight light sources 13La to 13Lc, 13Ra to 13Rc are not simultaneously turned on. Such an arrangement in which the sub headlight light sources that are turned on are dispersed can suppress a heat accumulation. Therefore, the heat dissipation structure can be downsized. As a result, the sub headlight unit 13 can be downsized.

As thus far described, the sub headlight unit 13 is configured such that the left and right sub headlight light sources 13L and 13R are arranged between the left and right main headlights 11. This allows the left and right sub headlight light sources 13L and 13R to be arranged in a state of being gathered at the center with respect to the width direction of the vehicle. Accordingly, the width of movement of the sub headlight light sources 13L and 13R moved in accordance with a change in the lean angle can be made small (see FIG. 10). Therefore, the sub headlight light sources 13L and 13R can be maintained at relatively high positions. This can consequently relieve the degree of change in the position and brightness of the illumination range of the sub headlight light source within the rider's field of view. Moreover, the main headlights 11 keep illuminating an area ahead in front of the motorcycle 10 irrespective of whether the sub headlight light sources 13L and 13R are turned on or turned off. Accordingly, it is possible to keep the ease of seeing a position the rider desires to see, even when the motorcycle 10 is returning from a lean attitude to an upright attitude. As a result, occurrence of a situation where the rider feels uncomfortable about a change in the illumination range can be suppressed in the course of an increase or decrease in the lean angle of the motorcycle 10.

In the sub headlight unit 13, along with an increase in the lean angle of the motorcycle 10 leaning to the left, the left sub headlight light sources 13La to 13Lc are sequentially turned on from the lowermost one of the sub headlight light sources 13La to 13Lc. The same applies to the right sub headlight light sources 13Ra to 13Rc. This can reduce a difference in the heights of the respective sub headlight light sources 13L and 13R at times when they are turned on. As a result, a difference in the illumination ranges produced on the road surface at times when the sub headlight light sources 13L and 13R are turned on can be made small. Accordingly, when seen from the rider, a difference in shadows, which are produced when an obstacle (such as unevenness on the road surface) exists, can be made small. This can more effectively suppress occurrence of a situation where the rider feels uncomfortable about a change in the illumination range in the course of an increase or decrease in the lean angle of the motorcycle 10.

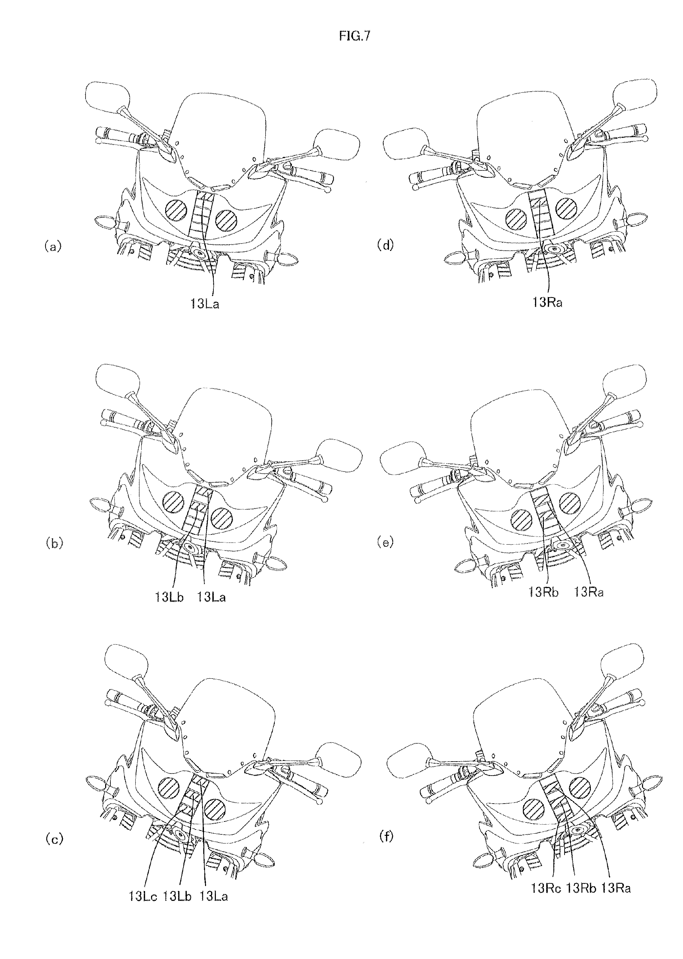

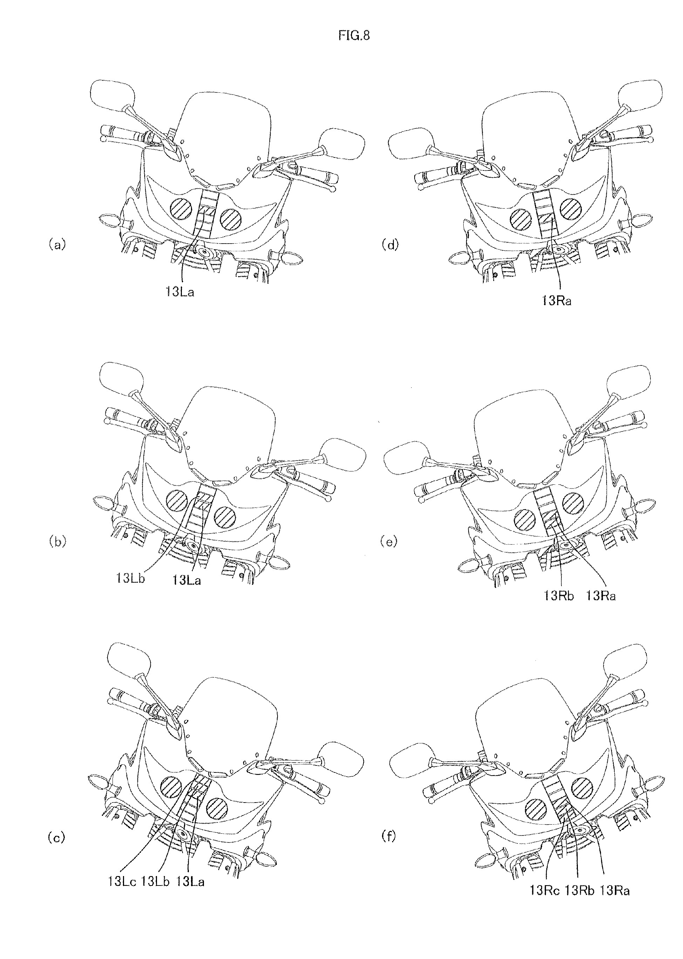

In this embodiment, a description has been given to a case where the left sub headlight light sources 13La to 13Lc and the right sub headlight light sources 13Ra to 13Rc are sequentially turned on from the lower side in accordance with an increase in the lean angle. However, the present invention is not limited to this example. For example, the sub headlight light sources may be turned on in manners shown in FIGS. 7 and 8.

FIGS. 7(a) to 7(c) are diagrams for explaining another example of the process in which the plurality of sub headlight light sources 13La to 13Lc are sequentially turned on in accordance with an increase in the lean angle of the motorcycle 10 leaning to the left. FIGS. 7(d) to 7(f) are diagrams for explaining another example of the process in which the plurality of sub headlight light sources 13Ra to 13Rc are sequentially turned on in accordance with an increase in the lean angle of the motorcycle 10 leaning to the right. In the example shown in FIG. 7, the sub headlight light sources 13La to 13Lc, 13Ra to 13Rc are arranged in the following order from the upper side:

the left sub headlight light source 13La;
the right sub headlight light source 13Ra;
the left sub headlight light source 13Lb;
the right sub headlight light source 13Rb;
the left sub headlight light source 13Lc; and
the right sub headlight light source 13Rc.

In the course of an increase in the lean angle of the motorcycle 10 leaning to the left, firstly, when the lean angle takes a value equal to or greater than the smallest reference value, the left sub headlight light source 13La arranged uppermost is turned on (FIG. 7(a)). Then, when the lean angle takes a value equal to or greater than the second smallest reference value, the left sub headlight light source 13Lb arranged second uppermost is turned on (FIG. 7(b)). Then, when the lean angle takes a value equal to or greater than the greatest reference value, the left sub headlight light source 13Lc arranged lowermost is turned on (FIG. 7(c)).

The same is true for a manner in which the right sub headlight light sources 13Ra to 13Rc are turned on in the course of an increase in the lean angle of the motorcycle 10 leaning to the right (FIGS. 7(d) to 7(f)).

The sub headlight light source (for example, 13La or 13Ra) configured to be turned on upon a small lean angle is more frequently turned on than the sub headlight light source (for example, 13Lb, 13Lc, 13Rb, or 13Rc) configured to be turned on upon a large lean angle. In the example shown in FIG. 7, the sub headlight light source configured to be turned on upon a small lean angle can be located at a relatively high position at a time when this sub headlight light source is turned on. Thus, a relatively wide illumination range can be ensured as the illumination range of the sub headlight light source configured to be turned on upon a small lean angle. Additionally, since the sub headlight light source is turned on at a relatively high position, it is relatively easy to set an illumination range on the road surface. It is also easy for the rider to visually recognize an obstacle (such as unevenness on the road surface) and an area behind the obstacle.

FIGS. 8(a) to 8(c) are diagrams for explaining still another example of the process in which the plurality of sub headlight light sources 13La to 13Lc are sequentially turned on in accordance with an increase in the lean angle of the motorcycle 10 leaning to the left. FIGS. 8(d) to 8(f) are diagrams for explaining still another example of the process in which the plurality of sub headlight light sources 13Ra to 13Rc are sequentially turned on in accordance with an increase in the lean angle of the motorcycle 10 leaning to the right. In the example shown in FIG. 8, the sub headlight light sources 13La to 13Lc, 13Ra to 13Rc are arranged in the following order from the upper side:

the left sub headlight light source 13Lc;
the left sub headlight light source 13Lb;
the left sub headlight light source 13La;
the right sub headlight light source 13Ra;
the right sub headlight light source 13Rb, and
the right sub headlight light source 13Rc.

In the course of an increase in the lean angle of the motorcycle 10 leaning to the left, firstly, when the lean angle takes a value equal to or greater than the smallest reference value, the left sub headlight light source 13La arranged in the third position from the upper side is turned on (FIG. 8(a)). Then, when the lean angle takes a value equal to or greater than the second smallest reference value, the left sub headlight light source 13Lb arranged in the second position from the upper side is turned on (FIG. 8(b)). Then, when the lean angle takes a value equal to or greater than the greatest reference value, the left sub headlight light source 13Lc arranged uppermost is turned on (FIG. 7(c)).

In the course of an increase in the lean angle of the motorcycle 10 leaning to the right, firstly, when the lean angle takes a value equal to or greater than the smallest reference value, the right sub headlight light source 13Ra arranged in the third position from the lower side is turned on (FIG. 8(d)). Then, when the lean angle takes a value equal to or greater than the second smallest reference value, the right sub headlight light source 13Rb arranged in the second position from the lower side is turned on (FIG. 8(e)). Then, when the lean angle takes a value equal to or greater than the greatest reference value, the right sub headlight light source 13Rc arranged lowermost is turned on (FIG. 8(c)).

In this manner, in the example shown in FIG. 8, the plurality of left sub headlights (13La to 13Lc) are arranged to form a continuous line in the vertical direction, while the plurality of right sub headlights (13Ra to 13Rc) are arranged to form a continuous line in the vertical direction. In the upper line, the headlights are turned on sequentially from the lower side (in the order of 13La, 13Lb, and 13Lc) in accordance with an increase in the lean angle, while in the lower line, the headlights are turned on sequentially from the upper side (in the order of 13Ra, 13Rb, and 13Rc) in accordance with an increase in the lean angle.

As described above, the sub headlight light source (for example, 13La or 13Ra) configured to be turned on upon a small lean angle is frequently turned on. In the example shown in FIG. 8, the sub headlight light source (13La, 13Ra) configured to be turned on upon a small lean angle is arranged at the center side in the vertically extending line of the left and right sub headlight light sources 13L and 13R. This enables an efficient use of parts of the heat dissipation structure corresponding to the sub headlight light sources that are currently turned off, which are arranged at both upper and lower sides.

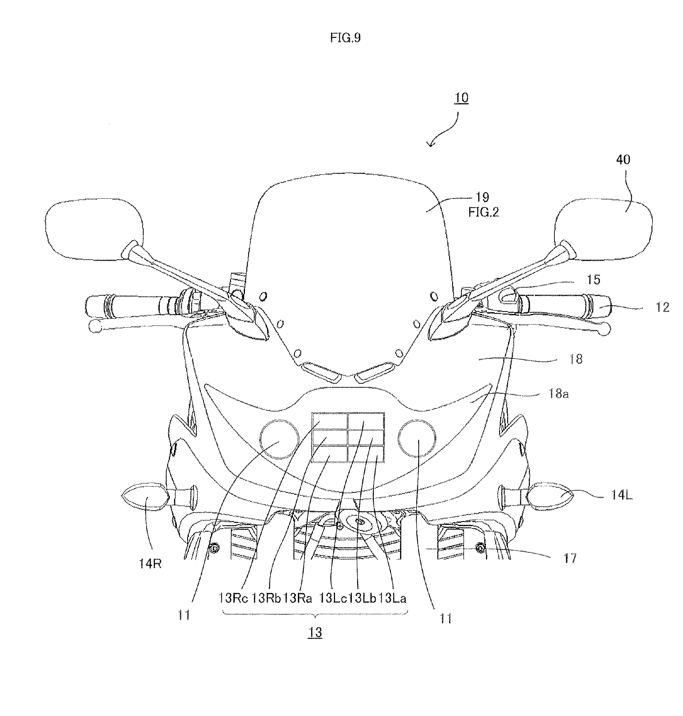

In the above-described examples, the left sub headlight light sources 13L and the right sub headlight light sources 13R are arranged in the vertical direction. Instead, in the present invention, an arrangement manner of left sub headlight light sources and right sub headlight light sources is not limited to this example. For example, an arrangement shown in FIG. 9 is adoptable.

FIG. 9 is a front elevational view schematically showing, on an enlarged scale, a part of a motorcycle according to another embodiment of the present invention. In FIG. 9, configurations equivalent to the configurations shown in FIG. 1 are given the same reference signs as those used in FIG. 1.

In an example shown in FIG. 9, similarly to the example shown in FIG. 1, a sub headlight unit 13 is provided between main headlights 11 arranged at both left and right sides with respect to the width direction of the vehicle, and the sub headlight unit 13 includes left sub headlight light sources 13La to 13Lc and right sub headlight light sources 13Ra to 13Rc.The left sub headlight light sources 13La to 13Lc are arranged in a vertical line. The right sub headlight light sources 13Ra to 13Rc are arranged in a vertical line. The line of the left sub headlight light sources 13La to 13Lc and the line of the right sub headlight light sources 13Ra to 13Rc are arranged side by side with respect to the width direction of the vehicle. The line of the left sub headlight light source 13La to 13La is located at the left side. The line of the right sub headlight light sources 13Ra to 13Rc is located at the right side.

Along with an increase in the lean angle of the motorcycle 10 leaning to the left, the left sub headlight light sources 13La to 13Lc are sequentially turned on from the lower side. Along with an increase in the lean angle of the motorcycle 10 leaning to the right, the right sub headlight light sources 13Ra to 13Rc are sequentially turned on from the lower side.

In the example shown in FIG. 9, the plurality of sub headlight light sources (13La to 13Lc, 13Ra to 13Rc) form two lines extending in the vertical direction. In the above-described example, the sub headlight light sources 13La to 13Lc, 13Ra to 13Rc are sequentially turned on from the lower side. However, the order of turning on is not particularly limited. The sub headlight light sources 13La to 13Lc, 13Ra to 13Rc may be sequentially turned on from the upper side.

Additionally, the left sub headlight light sources and the right sub headlight light sources may be turned on in different orders. For example, it may be possible that, in accordance with an increase in the lean angle, the left sub headlight light sources are sequentially turned on from the lower side while the right sub headlight light sources are sequentially turned on from the upper side. Furthermore, each of the two lines may include a mix of the left sub headlight light sources and the right sub headlight light sources. In the example shown in FIG. 9, too, in the same manner as the sub headlight unit 13 shown in FIG. 6, the left sub headlight light source 13L and the right sub headlight light source 13R can share the heat dissipation structure.

The above-described embodiments illustrate a case where there are three left sub headlight light sources 13L and three right sub headlight light sources 13R. In this respect, in the present invention, no particular limitation is put on the number of right sub headlight light sources and the number of left sub headlight light sources. There may be one or more right sub headlight light sources and one or more left sub headlight light sources.

The heat dissipation structure of the present invention is not particularly limited. Examples of the heat dissipation structure include a heatsink, a fan, and the like. The heatsink is not limited to a casing having a heat dissipation fin as illustrated in the above-described embodiments. Examples of the heatsink include a casing itself having a flat surface, a casing having a plurality of projections or unevenness, and the like. A combined use of a heatsink and a fan is allowed.

The above-described embodiments illustrate a case where the sub headlight unit 13 includes the heat dissipation structure that is shared among all of the left sub headlight light sources 13L and the right sub headlight light sources 13R. However, the present invention is not limited to this example case. For example, the sub headlight unit 13 may include a heat dissipation structure that is shared between at least one of the left sub headlight light sources 13L and at least one of the right sub headlight light sources 13R.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in these embodiments, the present invention is not limited to this example. For example, the detection part may include the lean angle sensor 22 while not including the vehicle speed sensor 23. The controller 20 corresponds to a control part of the present invention. However, a hardware configuration of the present invention is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached the reference value. In this case, the control part refers to the table based on the angular velocity and the vehicle speed, and thereby can determine whether or not the lean angle has reached the reference value without calculating the lean angle.

In these embodiments, the lean angle is the angle of inclination of the vehicle body to the inner side of a curve relative to the upright state (vertical direction). However, the present invention is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

These embodiments describe a case where the sub headlight unit 13 is a member separate from the control part (controller 20) and the detection part (the lean angle sensor 22 and the vehicle speed sensor 23). However, the present invention is not limited to this example. The sub headlight unit may include at least one of the control part, a communication part, and the detection part.

These embodiments describe a case where the sub headlight light source is turned on in accordance with the lean angle. Instead, in the present invention, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

In the present invention, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle.

In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.
(ii) The sub headlight light source is directly or gradually changed from the turn-off state to the dimmed light turn-on state in accordance with the lean angle.
(iii) The sub headlight light source is directly or gradually changed from the dimmed light turn-on state to the full light turn-on state in accordance with the lean angle.
(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of these embodiments, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

[DESCRIPTION OF THE REFERENCE SIGNS]

| | |
|---|---|
| 10 | motorcycle (vehicle that leans into turns) |
| 11 | main headlight |
| 11H | high beam light source (main headlight light source) |
| 11L | low beam light source (main headlight light source) |
| 12 | handlebar |
| 13L, 13R | sub headlight unit |
| 13La, 13Lb, 13Lc, 13Ra, 13Rb, 13Rc | sub headlight light source |
| 131 | substrate |
| 134 | inner lens |
| 135 | casing |
| 135a | reflection surface |
| 136 | heat dissipation fin |
| 14L, 14R | flasher |
| 15 | operation switch |
| 16 | headpipe |
| 17 | frontfork |

| 18 | front cover |
| 18a | outer cover |
| 19 | screen |
| 20 | controller |
| 22 | lean angle sensor |
| 23 | vehicle speed sensor |
| 40 | back mirror |
| 50 | engine |
| 51 | fuel tank |

## Claims

1. A vehicle that leans into turns with an attitude leaning to the inner side of a curve,
   the vehicle comprising:

   main headlight light sources (11) being arranged at both left and right sides with respect to a width direction of the vehicle (10) and being configured to illuminate an area ahead in front of the vehicle, and
   a sub headlight unit (13L, 13R) comprising a right sub headlight light source (13Ra, 13Rb, 13Rc) that illuminates an area ahead and to the right of the vehicle (10) and a left sub headlight light source (13La, 13Lb, 13Lc) that illuminates an area ahead and to the left of the vehicle (10), wherein
   the right sub headlight light source (13Ra, 13Rb, 13Rc) and the left sub headlight light source (13La, 13Lb, 13Lc) are configured such that the sub headlight light source that illuminates the same side as the side to which the vehicle (10) is leaning is turned on in accordance with an increase in the lean angleof the vehicle (10),
   **characterized in that**
   the right sub headlight light source (13Ra, 13Rb, 13Rc) and the left sub headlight light source (13La, 13Lb, 13Lc) being arranged between the main headlight light sources (11) to be closer to the center of the vehicle with respect to the width direction of the vehicle (10) than the main headlight light sources (11).

2. The vehicle according to claim 1, wherein
   the sub headlight unit (13L, 13R) includes a heat dissipation structure (136) that is shared between the right sub headlight light source (13Ra, 13Rb, 13Rc) and the left sub headlight light source (13La, 13Lb, 13Lc).

3. The vehicle according to claim 1 or 2, wherein
   when seen from the front side of the vehicle (10) in an upright state, the right sub headlight light source (13Ra, 13Rb, 13Rc) and the left sub headlight light source (13La, 13Lb, 13Lc) are arranged in a vertical alignment between the main headlight light sources (11) provided at both left and right sides.

4. The vehicle according to claim 3, wherein
   each of the left and right sub headlight light sources (13La, 13Lb, 13Lc, 13Ra, 13Rb, 13Rc) comprises a plurality of sub headlight light sources, and the left sub headlight light sources (13La, 13Lb, 13Lc) and the right sub headlight light sources (13Ra, 13Rb, 13Rc) are alternately arranged in a vertical direction.

5. The vehicle according to any one of claims 1 to 4, wherein
   each of the left and right sub headlight light sources (13La, 13Lb, 13Lc, 13Ra, 13Rb, 13Rc) comprises a plurality of sub headlight light sources,
   along with an increase in the lean angle of the vehicle (10), the plurality of sub headlight light sources that illuminate the same side as the side to which the vehicle (10) is leaning are sequentially turned on from the sub headlight light source located lowermost in an upright state.

6. The vehicle according to any one of claims 1 to 4, wherein
   each of the left and right sub headlight light sources (13La, 13Lb, 13Lc, 13Ra, 13Rb, 13Rc) comprises a plurality of sub headlight light sources,
   along with an increase in the lean angle of the vehicle (10), the plurality of sub headlight light sources that illuminate the same side as the side to which the vehicle (10) is leaning are sequentially turned on from the sub headlight light source located uppermost in an upright state.

7. A vehicle

according to any one of claims 1 to 6, comprising
a detection part (22) that detects a variable available for obtaining the lean angle of the vehicle (10); and
a control part (20) adapted to turn on the plurality of sub headlight light sources in accordance with the lean angle
of the vehicle (10) obtained based on a result of detection by the detection part (22).

8. A method to control a sub headlight unit (13L, 13R) in a vehicle (10) that leans into turns, with an attitude leaning
to the inner side of a curve,
the sub headlight unit (13L, 13R) comprising a right sub headlight light source (13Ra, 13Rb, 13Rc) that illuminates
an area ahead and to the right of the vehicle (10) and a left sub headlight light source (13La, 13Lb, 13Lc) that
illuminates an area ahead and to the left of the vehicle (10), wherein
the right sub headlight light source (13Ra, 13Rb, 13Rc) and the left sub headlight light source (13La, 13Lb, 13Lc)
are configured such that the sub headlight light source that illuminates the same side as the side to which the vehicle
(10) is leaning is turned on in accordance with an increase in the lean angle of the vehicle (10), the right sub headlight
light source (13Ra, 13Rb, 13Rc) and the left sub headlight light source (13La, 13Lb, 13Lc) being arranged between
main headlight light sources (11) provided in the vehicle (10) to be closer to the center of the vehicle with respect
to the width direction of the vehicle(10) than the main headlight light sources (11) and being turned on in accordance
with a lean angle of the vehicle (10), the main headlight lightsources (11) being arranged at both left and right sides
with respect to a width direction of the vehicle (10) and being configured to illuminate an area ahead in front of the
vehicle.

9. A method to control a sub headlight unit (13L, 13R) according to claim 8, wherein
each of the left and right sub headlight light sources (13La, 13Lb, 13Lc, 13Ra, 13Rb, 13Rc) comprises a plurality
of sub headlight light sources,
and along with an increase in the lean angle of the vehicle (10), the plurality of sub headlight light sources that
illuminate the same side as the side to which the vehicle (10) is leaning are sequentially turned on from the sub
headlight light source located lowermost in an upright state.

10. A method to control a sub headlight unit (13L, 13R) according to claim 8, wherein
each of the left and right sub headlight light sources (13La, 13Lb, 13Lc, 13Ra, 13Rb, 13Rc) comprises a plurality
of sub headlight light sources,
and along with an increase in the lean angle of the vehicle (10), the plurality of sub headlight light sources that
illuminate the same side as the side to which the vehicle (10) is leaning are sequentially turned on from the sub
headlight light source located uppermost in an upright state.

11. A method to control a sub headlight system in a vehicle (10) according to any one of claims 1 to 7, wherein
a detection part (22) detects a variable available for obtaining the lean angle of the vehicle (10); and
a control part (20) turns on the plurality of sub headlight light sources in accordance with the lean angle of the vehicle
(10) obtained based on a result of detection by the detection part (22).

**Patentansprüche**

1. Ein Fahrzeug, das sich in Kurven neigt mit einer Haltung, die sich zur Innenseite einer Kurve neigt, das Fahrzeug
weist auf:

Hauptvorderlichtquellen (11), die an rechten und linken Seiten mit Bezug zu einer Breitenrichtung des Fahrzeugs
(10) bereitgestellt sind und die konfiguriert sind, um eine Fläche voraus vorderhalb des Fahrzeugs zu beleuchten,
und
eine Nebenvorderlichteinheit (13L, 13R), die eine rechte Nebenvorderlichtquelle (13Ra, 13Rb, 13Rc) aufweist,
die eine Fläche voraus und nach rechts des Fahrzeugs (10) beleuchtet und eine linke Nebenvorderlichtquelle
(13La, 13Lb, 13Lc), die eine Fläche voraus und nach links des Fahrzeugs (10) beleuchtet, wobei
die rechte Nebenvorderlichtquelle (13Ra, 13Rb, 13Rc) und die linke Nebenvorderlichtquelle (13La, 13Lb, 13Lc)
so konfiguriert sind, dass die Nebenvorderlichtquelle, die die gleiche Seite beleuchtet zu der sich das Fahrzeug
neigt, in Übereinstimmung mit einer Zunahme des Neigungswinkels des Fahrzeugs (10) angeschaltet wird,
**dadurch gekennzeichnet, dass**
die rechte Nebenvorderlichtquelle (13Ra, 13Rb, 13Rc) und die linke Nebenvorderlichtquel-le (13La, 13Lb, 13Lc)
zwischen den Hauptvorderlichtquellen (11) angeordnet sind, um näher an dem Zentrum des Fahrzeugs in Bezug
zu der Breitenrichtung des Fahrzeugs (10) zu sein als die Hauptvorderlichtquellen (11).

2. Das Fahrzeug gemäß Anspruch 1, wobei die Nebenvorderlichteinheit (13L, 13R) eine Hitzeverteilungsstruktur (136) beinhaltet, die zwischen der rechten Nebenvorderlichtquelle (13Ra, 13Rb, 13Rc) und der linken Nebenvorderlichtquelle (13La, 13Lb, 13Lc) verteilt ist.

3. Das Fahrzeug gemäß Anspruch 1 oder 2, wobei von der Vorderseite des Fahrzeugs (10) in einem aufrechten Zustand gesehen die rechte Nebenvorderlichtquelle (13Ra, 13Rb, 13Rc) und die linke Nebenvorderlichtquelle (13La, 13Lb, 13Lc) in einer vertikalen Anordnung zwischen den Hauptvorderlichtquellen (11) angeordnet sind, die an der linken und rechten Seite angeordnet sind.

4. Das Fahrzeug gemäß Anspruch 3, wobei jede der linken und der rechten Nebenvorderlichtquellen (13La, 13Lb, 13Lc, 13Ra, 13Rb, 13Rc) eine Vielzahl von Nebenvorderlichtquellen beinhaltet und die linken Nebenvorderlichtquellen (13La, 13Lb, 13Lc) und die rechten Nebenvorderlichtquellen (13Ra, 13Rb, 13Rc) in einer vertikalen Richtung abwechselnd angeordnet sind.

5. Das Fahrzeug gemäß einem der Ansprüche 1 bis 4, wobei jede der linken und der rechten Nebenvorderlichtquellen (13La, 13Lb, 13Lc, 13Ra, 13Rb, 13Rc) eine Vielzahl von Nebenvorderlichtquellen beinhaltet, die die gleiche Seite zu der sich das Fahrzeug (10) neigt, mit einer Zunahme des Neigungswinkels des Fahrzeugs (10), beleuchten, und die nacheinander angeschaltet werden, beginnend von der Nebenvorderlichtquelle, die im aufrechten Zustand zu unterst angeordnet ist.

6. Das Fahrzeug gemäß einem der Ansprüche 1 bis 4, wobei jede der linken und der rechten Nebenvorderlichtquellen (13La, 13Lb, 13Lc, 13Ra, 13Rb, 13Rc) eine Vielzahl von Nebenvorderlichtquellen beinhaltet, die die gleiche Seite zu der sich das Fahrzeug (10) neigt, mit einer Zunahme des Neigungswinkels des Fahrzeugs (10), beleuchten, und die nacheinander angeschaltet werden, beginnend von der Nebenvorderlichtquelle, die im aufrechten Zustand zu oberst angeordnet ist.

7. Ein Fahrzeug gemäß einem der Ansprüche 1 bis 6, aufweisend:

einen Detektionsteil (22), der eine Variable erkennt, die zum Bestimmen des Neigungswinkels des Fahrzeugs (10) erhältlich ist, und
ein Kontrollteil (20), der adaptiert ist, um die Vielzahl der Nebenvorderlichtquellen in Übereinstimmung mit dem Neigungswinkel des Fahrzeugs (10) einzuschalten, wobei der Neigungswinkel als ein Resultat der Erkennung des Detektionsteils (22) erhalten wird.

8. Ein Verfahren zum Steuern einer Nebenvorderlichteinheit (13L, 13R) in einem Fahrzeug (10), das sich in Kurven neigt, mit einer Haltung, die sich zur Innenseite einer Kurve neigt,
die Nebenvorderlichteinheit (13L, 13R) beinhaltet eine rechte Nebenvorderlichtquelle (13Ra, 13Rb, 13Rc), die eine Fläche voraus und nach rechts des Fahrzeugs (10) beleuchtet und eine linke Nebenvorderlichtquelle (13La, 13Lb, 13Lc), die eine Fläche voraus und nach links des Fahrzeugs (10) beleuchtet, wobei
die rechte Nebenvorderlichtquelle (13Ra, 13Rb, 13Rc) und die linke Nebenvorderlichtquelle (13La, 13Lb, 13Lc) so konfiguriert sind, dass die Nebenvorderlichtquelle, die die gleiche Seite beleuchtet zu der sich das Fahrzeug neigt, in Übereinstimmung mit einer Zunahme des Neigungswinkels des Fahrzeugs (10) angeschaltet wird,
die rechte Nebenvorderlichtquelle (13Ra, 13Rb, 13Rc) und die linke Nebenvorderlichtquelle (13pa, 13Lb, 13Lc) sind zwischen Hauptvorderlichtquellen (11) angeordnet, die an dem Fahrzeug (10) angeordnet sind, um näher an dem Zentrum des Fahrzeugs in Bezug zu der Breitenrichtung des Fahrzeugs (10) angeordnet zu sein als die Hauptvorderlichtquellen (11) und diese werden in Übereinstimmung mit einem Neigungswinkel des Fahrzeugs (10) angeschaltet, die Hauptvorderlichtquellen (11) sind an rechten und linken Seiten mit Bezug zu einer Breitenrichtung des Fahrzeugs (10) angeordnet und sind konfiguriert, um eine Fläche voraus vorderhalb des Fahrzeugs zu beleuchten.

9. Ein Verfahren zum Steuern einer Nebenvorderlichteinheit (13L, 13R) gemäß Anspruch 8, wobei jede der linken und der rechten Nebenvorderlichtquellen (13La, 13Lb, 13Lc, 13Ra, 13Rb, 13Rc) eine Vielzahl von Nebenvorderlichtquellen beinhaltet, die die gleiche Seite zu der sich das Fahrzeug (10) neigt, mit einer Zunahme des Neigungswinkels des Fahrzeugs (10), beleuchten, und die nacheinander angeschaltet werden, beginnend von der Nebenvorderlichtquelle, die im aufrechten Zustand zu unterst angeordnet ist.

10. Ein Verfahren zur Steuerung einer Nebenvorderlichteinheit (13L, 13R) gemäß Anspruch 8, wobei jede der linken und der rechten Nebenvorderlichtquellen (13La, 13Lb, 13Lc, 13Ra, 13Rb, 13Rc) eine Vielzahl von Nebenvorderlichtquellen beinhaltet, die die gleiche Seite zu der sich das Fahrzeug (10) neigt, mit einer Zunahme des Neigungswinkels des Fahrzeugs (10), beleuchten, und die nacheinander angeschaltet werden, beginnend von der Nebenvorderlichtquelle, die im aufrechten Zustand zu oberst angeordnet ist.

**11.** Ein Verfahren zur Steuerung eines Nebenvorderlichtsystems in einem Fahrzeug (10) gemäß einem der Ansprüche 1 bis 7, wobei ein Detektionsteil (22) eine Variable zum Erhalten eines Neigungswinkels des Fahrzeugs (10) erkennt, und ein Kontrollteil (20) die Vielzahl der Nebenvorderlichtquellen in Übereinstimmung mit dem Neigungswinkels des Fahrzeugs (10) basierend auf einem Ergebnis der Erkennung des Detektionsteils (22) anschaltet.

## Revendications

**1.** Véhicule qui penche dans les virages avec inclinaison d'attitude vers le côté intérieur d'une courbe, le véhicule comprenant :

des sources de lumière de phare principal (11) agencées à la fois des côtés gauche et droit par rapport au sens de la largeur du véhicule (10) et configurées pour éclairer une zone située devant le véhicule, et une unité de phare secondaire (13L, 13R) comprenant une source de lumière de phare secondaire droit (13Ra, 13Rb, 13Rc) qui éclaire une zone située en avant et à droite du véhicule (10) et une source de lumière de phare secondaire gauche (13La, 13Lb, 13Lc) qui éclaire une zone située en avant et à gauche du véhicule (10), dans lequel
la source de lumière de phare secondaire droit (13Ra, 13Rb, 13Rc) et la source de lumière de phare secondaire gauche (13La, 13Lb, 13Lc) sont configurées de sorte que la source de lumière de phare secondaire qui éclaire le même côté que le côté vers lequel se penche le véhicule (10) est allumée en fonction de l'augmentation de l'angle d'inclinaison du véhicule (10),
**caractérisé en ce que**
la source de lumière de phare secondaire droit (13Ra, 13Rb, 13Rc) et la source de lumière de phare secondaire gauche (13La, 13Lb, 13Lc) sont agencées entre les sources de lumière de phare principal (11) de façon à être plus proches du centre du véhicule par rapport au sens de la largeur du véhicule (10) que les sources de lumière de phare principal (11).

**2.** Véhicule selon la revendication 1, dans lequel
l'unité de phare secondaire (13L, 13R) comporte une structure de dissipation de chaleur (136) qui est partagée entre la source de lumière de phare secondaire droit (13Ra, 13Rb, 13Rc) et la source de lumière de phare secondaire gauche (13La, 13Lb, 13Lc).

**3.** Véhicule selon la revendication 1 ou 2, dans lequel
vues du côté avant du véhicule (10) dans une position verticale, la source de lumière de phare secondaire droit (13Ra, 13Rb, 13Rc) et la source de lumière de phare secondaire gauche (13La, 13Lb, 13Lc) sont agencées en un alignement vertical entre les sources de lumière de phare principal (11) prévues à la fois des côtés gauche et droit.

**4.** Véhicule selon la revendication 3, dans lequel
chacune des sources de lumière de phare secondaire gauche et droite (13La, 13Lb, 13Lc, 13Ra, 13Rb, 13Rc) comprend une pluralité de sources de lumière de phare secondaire et les sources de lumière de phare secondaire gauche (13La, 13Lb, 13Lc) et les sources de lumière de phare secondaire droit (13Ra, 13Rb, 13Rc) sont agencées alternativement dans une position verticale.

**5.** Véhicule selon l'une quelconque des revendications 1 à 4, dans lequel
chacune des sources de lumière de phare secondaire gauche et droite (13La, 13Lb, 13Lc, 13Ra, 13Rb, 13Rc) comprend une pluralité de sources de lumière de phare secondaire,
avec l'augmentation de l'angle d'inclinaison du véhicule (10), la pluralité de sources de lumière de phare secondaire qui éclairent le même côté que le côté vers lequel se penche le véhicule (10) sont allumées successivement à partir de la source de lumière de phare secondaire située le plus bas dans la position verticale.

**6.** Véhicule selon l'une quelconque des revendications 1 à 4, dans lequel
chacune des sources de lumière de phare secondaire gauche et droite (13La, 13Lb, 13Lc, 13Ra, 13Rb, 13Rc) comprend une pluralité de sources de lumière de phare secondaires,
avec l'augmentation de l'angle d'inclinaison du véhicule (10), la pluralité de sources de lumière de phare secondaire qui éclairent le même côté que le côté vers lequel se penche le véhicule (10) sont allumées successivement à partir de la source de lumière de phare secondaire située le plus haut dans la position verticale.

7. Véhicule selon l'une quelconque des revendications 1 à 6, comprenant :

une partie de détection (22) qui détecte une variable disponible pour obtenir l'angle d'inclinaison du véhicule (10) ; et
une partie de commande (20) adaptée à allumer la pluralité de sources de lumière de phare secondaire en fonction de l'angle d'inclinaison du véhicule (10), obtenu en se basant sur le résultat de la détection par la partie de détection (22).

8. Procédé de commande d'une unité de phare secondaire (13L, 13R) dans un véhicule (10) qui penche dans les virages avec inclinaison d'attitude vers le côté intérieur d'une courbe,
l'unité de phare secondaire (13L, 13R) comprenant une source de lumière de phare secondaire droit (13Ra, 13Rb, 13Rc) qui éclaire une zone située en avant et à droite du véhicule (10) et une source de lumière de phare secondaire gauche (13La, 13Lb, 13Lc) qui éclaire une zone située en avant et à gauche du véhicule (10), dans lequel
la source de lumière de phare secondaire droit (13Ra, 13Rb, 13Rc) et la source de lumière de phare secondaire gauche (13La, 13Lb, 13Lc) sont configurées de sorte que la source de lumière de phare secondaire qui éclaire le même côté que le côté vers lequel se penche le véhicule (10) est allumée en fonction de l'augmentation de l'angle d'inclinaison du véhicule (10), la source de lumière de phare secondaire droit (13Ra, 13Rb, 13Rc) et la source de lumière de phare secondaire gauche (13La, 13Lb, 13Lc) étant agencées entre les sources de lumière de phare principal (11) prévues dans le véhicule (10) de façon à être plus proches du centre du véhicule par rapport au sens de la largeur du véhicule (10) que les sources de lumière de phare principal (11) et allumées en fonction de l'angle d'inclinaison du véhicule (10), les sources de lumière de phare principal (11) étant agencées à la fois des côtés gauche et droit par rapport au sens de la largeur du véhicule (10) et étant configurées pour éclairer une zone située devant le véhicule.

9. Procédé de commande d'une unité de phare secondaire (13L, 13R) selon la revendication 8, dans lequel chacune des sources de lumière de phare secondaire gauche et droite (13La, 13Lb, 13Lc, 13Ra, 13Rb, 13Rc) comprend une pluralité de sources de lumière de phare secondaire,
et avec l'augmentation de l'angle d'inclinaison du véhicule (10), la pluralité de sources de lumière de phare secondaire qui éclairent le même côté que le côté vers lequel se penche le véhicule (10) sont allumées successivement à partir de la source de lumière de phare secondaire située le plus bas dans la position verticale.

10. Procédé de commande d'une unité de phare secondaire (13L, 13R) selon la revendication 8, dans lequel chacune des sources de lumière de phare secondaire gauche et droite (13La, 13Lb, 13Lc, 13Ra, 13Rb, 13Rc) comprend une pluralité de sources de lumière de phare secondaires,
et avec l'augmentation de l'angle d'inclinaison du véhicule (10), la pluralité de sources de lumière de phare secondaire qui éclairent le même côté que le côté vers lequel se penche le véhicule (10) sont allumées successivement à partir de la source de lumière de phare secondaire située le plus haut dans la position verticale.

11. Procédé de commande d'un système de phare secondaire dans un véhicule (10) selon l'une quelconque des revendications 1 à 7,
dans lequel
une partie de détection (22) détecte une variable disponible pour obtenir l'angle d'inclinaison du véhicule (10) ; et
une partie de commande (20) allume la pluralité de sources de lumière de phare secondaire en fonction de l'angle d'inclinaison du véhicule (10), obtenu en se basant sur le résultat de la détection par la partie de détection (22).

EP 2 669 114 B1

FIG.1

FIG.2

FIG.3

FIG.4

(a)

(b)

FIG.5

(a)

13La

(b)

13Lb   13La

(c)

13Lc 13Lb 13La

(d)

13Ra

(e)

13Rb   13Ra

(f)

13Rc 13Rb 13Ra

FIG.6

FIG.7

(a)

13La

(d)

13Ra

(b)

13Lb    13La

(e)

13Rb    13Ra

(c)

13Lc 13Lb  13La

(f)

13Rc 13Rb 13Ra

FIG.8

(a)

13La

(b)

13Lb    13La

(c)

13Lc 13Lb 13La

(d)

13Ra

(e)

13Rb   13Ra

(f)

13Rc 13Rb 13Ra

FIG.9

FIG.10

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010061651 A

- EP 1800947 A1